# EUROPÄISCHE PATENTSCHRIFT

(11) **EP 3 274 220 B1**
(45) Veröffentlichungstag und Bekanntmachung des Hinweises auf die Patenterteilung: **23.01.2019**
(21) Anmeldenummer: 16720710.9
(22) Anmeldetag: 23.03.2016
(51) Int. Cl.: F16K 15/14, B60S 1/56, B60S 1/48, B60S 1/58

(54) **VENTIL UND REINIGUNGSEINRICHTUNG FÜR EIN KRAFTFAHRZEUG**
VALVE AND CLEANING DEVICE FOR A MOTOR VEHICLE
VANNE ET DISPOSITIF DE NETTOYAGE POUR UN VÉHICULE AUTOMOBILE

(30) Priorität: 25.03.2015 DE 102015003836
(43) Veröffentlichungstag der Anmeldung: 31.01.2018
(73) Patentinhaber: Audi AG, 85045 Ingolstadt (DE); Fränkische Industrial Pipes GmbH & Co. KG, 97486 Königsberg (DE)
(72) Erfinder: ORTENREITER, Andreas, 85055 Ingolstadt (DE); SCHROETER, Soeren, 96103 Hallstadt (DE)
(74) Vertreter: Mader, Wilfried
(86) Internationale Anmeldenummer: PCT/EP2016/000507
(87) Internationale Veröffentlichungsnummer: WO 2016/150569

(56) Entgegenhaltungen:
- DE-A1-102008 051 586
- DE-A1-102010 046 888
- FR-A1- 2 302 218
- JP-A- 2006 290 236
- US-A- 4 728 260
- US-A1- 2003 029 932
- US-A1- 2004 188 541
- US-A1- 2008 067 865

## Beschreibung

Die Erfindung betrifft ein Ventil für ein Kraftfahrzeug gemäß dem Oberbegriff des Patentanspruchs 1 und ein Ventil gemäß dem Oberbegriff des Patentanspruchs 12. Des Weiteren betrifft die Erfindung eine Reinigungseinrichtung für ein Kraftfahrzeug gemäß dem Oberbegriff des Patentanspruchs 11 und eine Reinigungseinrichtung für ein Kraftfahrzeug gemäß dem Oberbegriff des Patentanspruchs 21. Außerdem betrifft die Erfindung ein Kraftfahrzeug.

Aus der DE 102 36 965 A1 ist ein Rückschlagventil zur Verwendung in einer Scheiben- oder Scheinwerferwaschanlage eines Fahrzeugs mit einem Ventilgrundkörper und einem daran angebrachten Ventilsitz und mit einem am Ventilsitz gehaltenen Ventilkörper aus einem formstabilen, aber elastischen Material, wobei der Ventilkörper unter Druck eine durch eine Dichtkante begrenzte Fluidöffnung freigibt, bekannt. Damit keine Flüssigkeit unkontrolliert austritt, ist ein Ventildorn vorgesehen, wobei die Dichtkante im Ruhezustand am Ventildorn zur Anlage kommt. Nachteilig an einem solchen Rückschlagventil ist, dass an ihm jeweils nur ein Verbraucher angeschlossen werden kann.

Die DE 10 2010 046 888 A1 offenbart eine Reinigungsvorrichtung mit einem Flüssigkeitsverteiler, über welchen eine Reinigungsflüssigkeit über einen als Magnetventil ausgebildeten jeweiligen Mengenbegrenzer an den jeweiligen Mengenbegrenzern jeweils zugeordnete Wischzonen zuführbar ist.

Die FR 2 302 218 A1 offenbart eine Waschvorrichtung für Scheiben von Kraftfahrzeugen, bei welchem eine Waschflüssigkeit aus einer ersten Kammer über ein erstes Rückschlagventil und aus einer zweiten Kammer über ein zweites Rückschlagventil wechselweise zu entsprechenden Waschdüsen pumpbar ist.

Außerdem offenbart die US 2008/067865 A1 ein Fahrzeug-Hydraulik-System mit einem Prioritätsventil, das über einen Anschluss A mit einem Hydraulikfluid versorgbar ist. Abhängig von einem Druck in einem Primärkanal ist das Hydraulikfluid aus dem Prioritätsventil über einen Anschluss B oder über zwei Anschlüsse B und D oder über drei Anschlüsse B, D und C leitbar.

Um an einem Ventil mehrere, gegebenenfalls unterschiedliche Verbraucher vorsehen zu können, ist es bekannt, dass das Ventil einen von einem Fluid durchströmbaren Ventilkörper mit einer Zuleitung umfasst, welche mittels einer einstellbaren Pumpeinrichtung mit dem Fluid beaufschlagbar ist, und mit einer ersten Ableitung und mit wenigstens einer weiteren, zweiten Ableitung zum Versorgen eines jeweiligen zugeordneten ersten und wenigstens eines weiteren, zweiten Verbrauchers mit dem Fluid. Nachteilig ist hierbei jedoch, dass die Verbraucher nicht getrennt voneinander mit dem Fluid versorgbar sind. Sobald einer der beiden Verbraucher mit Fluid versorgt wird, wird auch der andere der beiden Verbraucher versorgt. Um dies zu verhindern, ist sonst eine komplexe und kostenintensive Steuerung, insbesondere eine elektromechanische Steuerung des Ventils vorzusehen. Damit kann zwischen dem Versorgen nur eines Verbrauchers und aller Verbraucher geschaltet werden.

Aufgabe der vorliegenden Erfindung ist es, ein besonders kostengünstiges und bauraumsparendes Ventil für ein Kraftfahrzeug zu schaffen, mit dem eine Versorgung von Verbrauchern in unterschiedlicher Art und Weise schaltbar ist. Außerdem ist es Aufgabe der Erfindung, eine besonders kostengünstige Reinigungseinrichtung für ein Kraftfahrzeug und ein besonders kostengünstiges Kraftfahrzeug zu schaffen.

Diese Aufgabe wird erfindungsgemäß durch ein Ventil mit den Merkmalen des Patentanspruchs 1 sowie ein Ventil mit den Merkmalen des Patentanspruchs 13 gelöst. Des Weiteren wird diese Aufgabe durch eine Reinigungseinrichtung mit den Merkmalen des Patentanspruchs 12, eine Reinigungseinrichtung mit den Merkmalen des Patentanspruchs 24 und ein Kraftfahrzeug mit den Merkmalen des Patentanspruchs 26 gelöst. Vorteilhafte Ausgestaltungen mit zweckmäßigen Weiterbildungen der Erfindung sind in den übrigen Patentansprüchen angegeben.

Den beiden erfindungsgemäßen Ventilen liegt dabei die gemeinsame Idee zugrunde, dass durch selbsttätiges Schalten mittels im Ventilkörper integrierte Rückschlagventile kostengünstige und bauraumsparende Ventile zur Verfügung gestellt werden können. Es gibt keine Notwendigkeit für eine teure Membrane, eine Federlagerung von Teilen, eine aktive Steuerung, komplexe Leitungssysteme und Umkehrung von Pumprichtung um die Versorgung von jeweiligen Verbrauchern wie gewünscht schalten zu können. Zudem ist nur eine Zuleitung notwendig und das Ventil ist trotzdem schaltbar. Eine zweite Zuleitung oder eine Steuerleitung wird also nicht benötigt. Eines der beiden erfindungsgemäßen Ventile stellt dabei eine Versorgung wahlweise nur eines Verbrauchers oder beider Verbraucher gleichzeitig zur Verfügung - was hier auch als UND-Ventil bezeichnet werden soll während das andere Erfindungsgemäße Ventile die Versorgung wahlweise jeweils nur eines der zwei Verbraucher zu Verfügung stellt - was hier auch als ODER-Ventil bezeichnet werden soll.

Die beiden Ventile können jedoch vorteilhafter Weise so gestaltet sein, dass diese durch geringe Umrüstungen und/oder Modifikation leicht von einem ODER-Ventil in ein UND-Ventil und umgekehrt geändert werden können. Die vorteilhaften Ausgestaltungen eines Ventils stellen so auch vorteilhafte Ausgestaltungen des jeweils anderen Ventils dar. Die beanspruchten Reinigungseinrichtungen nutzen jeweils entweder das UND-Ventil oder das ODER-Ventil.

Ein erster Aspekt der Erfindung betrifft ein Ventil. Um ein Ventil der eingangs angegebenen Art zu schaffen, welches schaltbar und besonders kostengünstig ist, ist es erfindungsgemäß vorgesehen, dass das Ventil wenigstens ein Rückschlagventil umfasst, welches bei einem ersten Druck lediglich ein Strömen des Fluids von der Zuleitung in die erste Ableitung zulässt und erst ab einem vorbestimmten zweiten Druck, welcher höher ist als der erste Druck, ein Strömen des Fluids von der Zuleitung auch in die zweite Ableitung zulässt. Ein Rückschlagventil kann beispielsweise als eine federbelastete Kugel oder Klappe ausgebildet sein, insbesondere innerhalb des Ventilkörpers. Das Ventil ist also insofern schaltbar, als entweder nur der erste Verbraucher mit dem Fluid versorgt wird oder in einem weiteren Schaltungszustand sowohl der erste als auch der zweite Verbraucher. Es handelt sich also um das sogenannte UND-Ventil. Dabei ist es auch möglich, mehrere Ventile in Reihe zu schalten, um so jeweils eine beliebige Anzahl von Verbrauchern zu realisieren. Die Versorgung der Verbraucher mit dem Fluid ist auch dann in Abhängigkeit des Drucks des Fluids automatisch schaltbar.

Möglich ist aber auch eine Realisierung des Ventils mit einer beliebigen Anzahl von Ableitungen, wobei durch eine entsprechende Anzahl von Rückschlagventilen dafür gesorgt werden kann, dass jede Ableitung erst ab einem vorbestimmten Druck mit Fluid durchströmt wird und damit ein zugeordneter Verbraucher versorgt wird. Die Rückschlagventile können dabei jeweils unterschiedliche vorbestimmte Drücke aufweisen, bei denen diese sich in einer Durchflussrichtung öffnen. Ein Ventil mit drei Verbrauchern kann beispielsweise so gestaltet sein, dass bei dem ersten Druck nur der erste Verbraucher mit Fluid versorgt wird, bei dem zweiten, höheren Druck der erste und der zweite Verbraucher, oder alle drei Verbraucher bei einem nochmals höheren, dritten Druck.

Das erfindungsgemäße UND-Ventil ist besonders kostengünstig. Es sind keine zusätzlichen elektrischen oder mechanischen Vorrichtungen notwendig, um das Ventil schalten zu können. Das Ventil schaltet automatisch in Abhängigkeit des Drucks. Damit entfällt auch eine sonst notwendige beispielsweise elektrische, pneumatische oder hydraulische Ansteuerung des Ventils über Steuerleitungen. Zudem ist keine zusätzliche Steuereinrichtung für das Ventil nötig. Das Ventil kann rein passiv in Abhängigkeit des Drucks des Fluids in der Zuleitung geschaltet werden.

Als Fluid ist vorzugsweise eine Reinigungsflüssigkeit, wie beispielsweise ein Alkohol-Wasser-Gemisch, vorgesehen. In diesem Fall kann das Ventil beispielsweise in einer Reinigungseinrichtung eines Kraftfahrzeugs, wie beispielsweise einer Scheibenwaschanlage, eingesetzt sein. Entsprechende Verbraucher sind dabei beispielsweise die Scheibenwischanlage mit ihren jeweiligen Waschdüsen, eine Scheinwerferwaschanlage und/oder eine Waschanlage für Sensoren wie Kameras. Alternativ kann als Fluid auch beispielsweise Öl, Kraftstoff oder Luft vorgesehen sein. In diesen Fällen kann das Ventil beispielsweise in einem Getriebe, einem Motor, einer Klimaanlage und/oder deren entsprechenden Versorgungsleitungen eingesetzt sein.

Bei dem erfindungsgemäßen UND-Ventil ist vorgesehen, dass wenigstens ein Rückschlagventil eine elastisch verformbare Tülle umfasst. Eine elastisch verformbare Tülle ist besonders wartungsarm, kostengünstig und leicht. Beispielsweise wird die elastisch verformbare Tülle über eine dem Rückschlagventil zugeordnete Leitung des Ventilkörpers gestülpt. In Sperrrichtung verhindert sie dann einen Rückfluss des Fluids. In Durchflussrichtung wird dann ein Durchströmen der Leitung ab einem vorbestimmten Druck durch eine Verformung der Tülle zugelassen, wodurch eine entsprechende Öffnung in der Leitung freigegeben wird. Bei der Leitung kann es sich beispielsweise um die Zuleitung oder eine der Ableitungen handeln.

Bei dem erfindungsgemäßen UND-Ventil ist vorgesehen, dass die elastische Tülle über ein Rohrelement des Ventils gestülpt ist, wobei die elastische Tülle wenigstens eine bei dem zweiten vorbestimmten Druck durch Verformung freigebbare Durchgangsöffnung aufweist, welche nicht in Überdeckung mit einem Ausgang des Rohrelements angeordnet ist. Vorzugsweise weist die elastische Tülle dabei überhaupt keine Durchgangsöffnung in Überdeckung mit dem Ausgang des Rohrelements auf. Das Rohrelement kann dabei ein beliebiges Element zum Führen des Fluids sein. Die freigebbare Durchgangsöffnung der Tülle kann beispielsweise quer zu einem Ausgang an einer Außenwand des Rohrelements anliegen. Bei einer Beaufschlagung mit dem zweiten vorbestimmten Druck wird die Tülle an dem Ausgang des Rohrelements durch das Fluid so verformt, dass das Fluid von dem Ausgang des Rohrelements weiter zu und dann durch die Durchgangsöffnung zu einer Ableitung fließen kann. Dadurch kann eine besonders kostengünstige selbsttätige, druckabhängige Schaltung des Ventils bereitgestellt werden.

In weiterer vorteilhafter Ausgestaltungsform des erfindungsgemäßen UND-Ventils ist es vorgesehen, dass das Rückschlagventil ab einem vorbestimmten dritten Druck, welcher höher ist als der zweite Druck, ein Strömen des Fluids von der Zuleitung in die zweite Ableitung wieder blockiert. Damit ist es möglich, jeweilige Verbraucher vor Beschädigung durch einen Überdruck einfach durch eine selbständige Schaltung zu schützen. Zudem ist es so möglich, bei dem Ventil weitere selbsttätige Schaltmöglichkeiten vorzusehen. Beispielsweise kann so vorgesehen sein, dass bei einem ersten Druck die erste Ableitung mit dem Fluid versorgt wird, ab dem vorbestimmten zweiten Druck die erste und die zweite Ableitung mit Fluid versorgt wird und ab einem vorbestimmten dritten Druck wieder lediglich die erste Ableitung mit Fluid versorgt wird. Alternativ kann das Ventil aber auch so ausgebildet sein, dass ab dem dritten Druck das Strömen des Fluids von der Zuleitung sowohl in die erste als auch in die zweite Ableitung blockiert wird. Dafür kann beispielsweise ein entsprechendes Rückschlagventil an der Zuleitung angeordnet sein. Somit kann dann durch lediglich ein weiteres Rückschlagventil das UND-Ventil zu einem ODER-Ventil modifiziert werden. Ein Rückschlagventil an der Zuleitung kann beispielsweise leicht in Form einer Tülle nachgerüstet werden.

In weiterer vorteilhafter Ausgestaltung des erfindungsgemäßen UND-Ventils ist vorgesehen, dass das Rückschlagventil ab einem vorbestimmten vierten Druck, welcher geringer ist als der erste Druck, ein Strömen des Fluids von der Zuleitung in die erste Ableitung und/oder zweite Ableitung blockiert. Damit kann verhindert werden, dass beispielsweise bei einem geringen Restdruck ein Verbraucher ungewollt mit Fluid versorgt wird. Insbesondere kann so beispielswiese auch ein Strömen von Fluid zu jeweiligen Verbrauchern aufgrund von auf das Fluid bei Fahrbewegung wirkenden Kräften verhindert werden. Mittels des Ventils kann so auch selbsttätig verhindert werden, dass Fluid ungewollt von der ersten und/oder der zweiten Ableitung zurück in die Zuleitung läuft. Vorzugsweise ist der vierte Druck dabei höher als ein hydrostatischer Druck in den jeweiligen Leitungen bei einer ausgeschalteten Pumpeinrichtung. Dadurch kann auch ein Rückfließen von Fluid bei einer stehenden Fluidsäule in der ersten und/oder der zweiten Ableitung zuverlässig verändert werden.

In weiterer vorteilhafter Ausgestaltung des erfindungsgemäßen UND-Ventils ist es vorgesehen, dass wenigstens ein Rückschlagventil an der zweiten und/oder der ersten Ableitung angeordnet ist. In diesem Fall ist das Rückschlagventil besonders einfach für eine Wartung zugänglich. Außerdem kann es besonders einfach zusammen mit dem Verbraucher an dem Ventil montiert werden. Insbesondere wenn an jeder Ableitung ein Rückschlagventil angeordnet ist, kann jedes Rückschlagventil unmittelbar einem Verbraucher zugeordnet werden. Damit kann mit dem jeweiligen zugeordneten Rückschlagventil unmittelbar vorgegeben werden, ab welchem Druck von Fluid in der Zuleitung und/oder dem Ventilkörper der zugeordnete Verbraucher mit dem Fluid versorgt wird.

Besonders vorteilhaft ist es, wenn wenigstens ein Rückschlagventil an der Zuleitung angeordnet ist. Damit kann ein Einströmen des Fluids aus der Zuleitung in den Ventilkörper erst ab einem vorbestimmten Druck zugelassen werden. Außerdem kann so besonders gut verhindert werden, dass aus dem Ventilkörper das Fluid in die Zuleitung zurückfließt.

In weiterer vorteilhafter Ausgestaltung des erfindungsgemäßen UND-Ventils ist es vorgesehen, dass die elastische Tülle eine stromab von dem Rohrelement liegende Ableitung durch Verformung ab dem dritten vorbestimmten Druck blockiert. Dafür kann das Fluid an dem Ausgang des Rohrelements die Tülle beispielsweise so verformen, dass diese fluiddicht auf eine Öffnung der Ableitung gedrückt wird. Dadurch kann ein kostengünstiges selbsttätiges Verschließen des Ventils ab dem dritten vorbestimmten Druck bereitgestellt werden. Die elastische Tülle kann so einen wartungsfreien und verschleißarmen Überdruckschutz bereitstellen. Ebenso ist es bei dieser Bauweise der Tülle kostengünstig möglich, bei dem Ventil weitere Schaltzustände vorzusehen.

Vorteilhaft ist es dabei, wenn die elastische Tülle durch einen Silikonwerkstoff gebildet ist. Ein Silikonwerkstoff ist besonders kostengünstig und widerstandsfähig. Außerdem kann ein Silikonwerkstoff die entsprechende zugeordnete Leitung besonders gut in Sperrrichtung abdichten. Silikonwerkstoffe sind zudem leicht mit unterschiedlicher Festigkeit herstellbar, sodass besonders einfach der Druck, bei welchem sich das Rückschlagventil in seiner Durchflussrichtung öffnet, vorgegeben werden kann.

Weiterhin vorteilhaft ist es, wenn wenigstens ein Rückschlagventil als Drossel ausgebildet ist. Eine Drossel reduziert die Durchflussmenge des Fluids in der zugeordneten Leitung gegenüber einem nicht als Drossel ausgebildeten Rückschlagventil. Ist das als Drossel ausgebildete Rückschlagventil beispielsweise an der ersten Ableitung angeordnet, fließt bei dem vorbestimmten zweiten Druck eine geringere Fluidmenge zu dem ersten Verbraucher als zu dem zweiten Verbraucher. Mit dem entsprechend ausgebildeten Ventil kann also für jeden Verbraucher die Durchflussmenge an Fluid vorbestimmt werden. Außerdem kann so verhindert werden, dass es zu einer großen Durchflussmengenerhöhung kommt, wenn der Druck des Fluids in der Zuleitung durch eine entsprechende Einstellung der Pumpeinrichtung von dem ersten auf den zweiten Druck erhöht wird.

Besonders vorteilhaft ist es, wenn das UND-Ventil für eine Reinigungseinrichtung, insbesondere eine Scheibenwaschanlage, des Kraftfahrzeugs vorgesehen ist. Entsprechend ist das Fluid eine Reinigungsflüssigkeit. Gerade bei Reinigungseinrichtungen kann es von Vorteil sein, wenn nur bestimmte Verbraucher mit Fluid versorgt werden. Insbesondere kann so der Verbrauch der nur in begrenzter Menge im Kraftfahrzeug mitführbaren Reinigungsflüssigkeit besonders reduziert werden. Ein beispielsweise elektronisch schaltbares Ventil kann für solche eine Einsparung an Reinigungsflüssigkeit zu aufwendig und zu kostenintensiv sein. Außerdem kann es zu viel Bauraum in dem Kraftfahrzeug benötigen. Das erfindungsgemäße Ventil ist dagegen besonders kostengünstig, bauraumsparend und ohne weitere Einrichtungen automatisch schaltbar.

Um eine besonders kostengünstige Reinigungseinrichtung für ein Kraftfahrzeug mit wenigstens einem ersten und einem zweiten Verbraucher, einer einstellbaren Pumpeinrichtung und mit einem erfindungsgemäßen UND-Ventil zu schaffen, ist es vorgesehen, dass die Pumpeinrichtung mit einer ersten Leistungsstufe betreibbar ist, bei welcher das wenigstens eine Rückschlagventil geschlossen bleibt und nur der der ersten Ableitung zugeordnete Verbraucher mit dem Fluid versorgbar ist, und die Pumpeinrichtung mit wenigstens einer zweiten, höheren Leistungsstufe betreibbar ist, bei welcher sich das wenigstens eine Rückschlagventil öffnet und auch der der zweiten Ableitung zugeordnete, zweite Verbraucher mit dem Fluid versorgbar ist. Somit wird das Ventil in Abhängigkeit von der Leistungsstufe der einstellbaren Pumpeinrichtung automatisch geschaltet. Eine einstellbare Pumpeinrichtung kann dafür besonders kostengünstig realisiert werden. Beispielsweise kann mit einer simplen Steuereinrichtung die Versorgungsspannung der Pumpeinrichtung verändert werden, um damit ihre Leistungsstufe zu verändern. Im Kraftfahrzeuginneren können dann entsprechende Bedienelemente vorgesehen werden, bei deren Betätigung beispielsweise nur der erste Verbraucher mit Fluid versorgt wird oder der erste und der zweite Verbraucher.

Besonders vorteilhaft ist es dabei, wenn der erste Verbraucher die Reinigungsanlage eines Sensors des Kraftfahrzeugs, insbesondere einer Kamera, ist und der zweite Verbraucher eine Scheibenwaschanlage, insbesondere eine Heckscheibe des Kraftfahrzeugs, ist. Beispielsweise eine in Rückfahrrichtung weisende Kamera des Kraftfahrzeugs, welche in der Stoßstange des Kraftfahrzeugs angeordnet ist, wird häufig bei Betrieb des Kraftfahrzeugs mehr verschmutzt als die Heckscheibe. Dann ist es beispielsweise bei einem Einparkmanöver wünschenswert, wenn lediglich diese Kamera kurz gereinigt werden kann, ohne dass dabei auch die gesamte Heckscheibe gereinigt wird. Gerade die Reinigung der Heckscheibe kann, insbesondere durch die dabei gegebenenfalls auch notwendigen Scheibenwischerbewegungen, besonders langwierig sein. Damit kann das Einparkmanöver erheblich verzögert werden. Bei einer Reinigungseinrichtung mit dem erfindungsgemäßen Ventil kann dagegen nur die Kamera gereinigt werden, ohne dass auch die Heckscheibe gereinigt werden muss. Dafür ist es jedoch nicht notwendig, zwei getrennte Fluidkreisläufe und/oder Pumpeinrichtungen vorzusehen, um die beiden Verbraucher getrennt voneinander mit Fluid versorgen zu können. Soll dagegen auch die Heckscheibe gereinigt werden, ist auch damit zu rechnen, dass die Kamera ebenfalls gereinigt werden muss. Deswegen ist es auch nicht als nachteilig anzusehen, dass in diesem Fall sowohl der erste als auch der zweite Verbraucher mit dem Fluid versorgt werden. Um den Fluidverbrauch besonders gering zu halten, kann jedoch auch vorteilhafterweise ein sogenanntes ODER-Ventil eingesetzt werden, welches noch später beschrieben wird.

Es kann auch sinnvoll sein, wenn das der Kamera zugeordnete Rückschlagventil als Drossel ausgebildet ist, damit die Kamera mit einer geringeren Menge von Fluid gereinigt wird als die Heckscheibe. Gegebenenfalls kann eine solche Drosselung aber auch durch einen geringeren Öffnungsdruck an der Kamera gegeben sein. Die Kamera hat üblicherweise eine geringere Oberfläche als die Heckscheibe und benötigt entsprechend eine geringere Fluidmenge, um wenigstens genauso gut gereinigt werden zu können.

Alternativ zu einer Reinigungsanlage eines Sensors kann als erster Verbraucher auch eine Scheinwerferwaschanlage vorgesehen sein. Gegenüber beispielsweise einer Heck- oder Frontscheibe des Kraftfahrzeugs haben auch die Scheinwerfer eine geringere zu reinigende Fläche. Aufgrund ihrer Positionierung ist zudem ebenfalls damit zu rechnen, dass diese früher als die jeweiligen Scheiben verschmutzt werden. Dabei ist es auch denkbar, dass die Reinigungsanlage des Sensors und die Scheinwerferwaschanlage zusammen als erster Verbraucher an dem Ventil angeschlossen werden. Dann werden diese beiden Komponenten gleichzeitig gereinigt.

Es ist jedoch auch möglich, dass Scheinwerferreinigungsanlagen besonders viel Fluid benötigen, um starke Verschmutzungen an den Scheinwerfern entfernen zu können, insbesondere wenn die Scheinwerfer mit einer geringen Frequenz gereinigt werden. Dann ist es sinnvoll, die Scheinwerferreinigungsanlage an der Ableitung anzuschließen, welche bei dem höheren Druck mit Fluid versorgt wird.

Ein weiterer Aspekt der Erfindung betrifft ebenfalls ein Ventil der oben genannten Art. Erfindungsgemäß ist es dabei vorgesehen, dass das Ventil ein an der ersten Ableitung angeordnetes erstes Rückschlagventil umfasst und ein zweites an der zweiten Ableitung angeordnetes zweites Rückschlagventil, wobei bei einem ersten Druck, welcher kleiner ist als ein vorbestimmter zweiter Druck, sich eine Tülle so über das Rohrelement legt, dass dessen Ausgang verschlossen ist. Hierbei verhindert das erste Rückschlagventil bei dem zweiten Druck ein Strömen des Fluids von der Zuleitung in die erste Ableitung, während das zweite Rückschlagventil bei dem zweiten Druck ein Strömen des Fluids von der Zuleitung in die zweite Ableitung zulässt und ab einem vorbestimmten dritten Druck, welcher höher ist als der zweite Druck, das erste Rückschlagventil ein Strömen des Fluids von der Zuleitung in die erste Ableitung zulässt, während das zweite Rückschlagventil bei dem dritten Druck ein Strömen des Fluids von der Zuleitung in die zweite Ableitung verhindert. Dieses Ventil erlaubt also eine Versorgung entweder des ersten oder des zweiten Verbrauchers in Abhängigkeit von dem Druck, wobei das Ventil selbstständig schaltet. Es handelt sich hierbei also um das Ventil, welches auch als ODER-Ventil bezeichnet wird.

Bei dem erfindungsgemäßen ODER-Ventil ist vorgesehen, dass das zweite Rückschlagventil als elastische Tülle ausgebildet ist, welche über ein Rohrelement des Ventils gestülpt ist, wobei die elastische Tülle wenigstens eine bei dem zweiten vorbestimmten Druck durch Verformung freigebbare Durchgangsöffnung aufweist, welche nicht in Überdeckung mit einem Ausgang des Rohrelements angeordnet ist. Bei der so gestalteten Tülle handelt es sich um ein besonders preiswertes und robustes Rückschlagventil. Dadurch, dass keine beweglichen Teile notwendig sind, ist das Ventil besonders wartungsarm.

In weiterer vorteilhafter Ausgestaltung des erfindungsgemäßen ODER-Ventils ist es vorgesehen, dass ein Stirnbereich der elastischen Tülle, welcher wenigstens teilweise in Überdeckung mit dem Ausgang des Rohrelements angeordnet ist, eine größere Wandstärke aufweist als in wenigstens einem an die Durchgangsöffnung angrenzenden Teilbereich. Dadurch gibt die Tülle die Ableitung besonders zuverlässig bei den verschiedenen Drücken frei und versperrt diese auch besonders zuverlässig wieder. Beispielsweise kann der Stirnbereich eine Dicke von 0,7 mm aufweisen, während eine Seitenwand lediglich 0,5 mm dick ist.

In weiterer vorteilhafter Ausgestaltung des erfindungsgemäßen ODER-Ventils ist es vorgesehen, dass die wenigstens eine Durchgangsöffnung einen Durchmesser von größer oder gleich 1 mm, insbesondere 2 mm, aufweist. Dadurch kann eine besonders große Durchflussmenge bereitgestellt werden. Zudem erzeugt die Tülle so besonders wenig zusätzlichen Strömungswiderstand. Da die Durchgangsöffnung seitlich angeordnet ist, kann Sie bei einer solch großen Öffnung zudem trotzdem nicht ohne Weiteres durch einen Fluidstrom beschädigt werden.

In weiterer vorteilhafter Ausgestaltung des erfindungsgemäßen ODER-Ventils ist es vorgesehen, dass die Durchgangsöffnung bei dem ersten Druck durch wenigstens bereichsweise Anlage der Tülle an dem Rohrelement verschlossen ist und bei dem zweiten Druck durch ein wenigstens bereichsweise Abheben der Tülle von dem Rohrelement freigegeben ist. So kann das Ventil mit der Tülle besonders zuverlässig schalten. Zudem sind keine zusätzlichen Dichtelemente erforderlich. Außerdem ist die Tülle aufgrund der Anlage bei besonders hohen Drücken vor einer Beschädigung und/oder einer ungewollten Deformation geschützt.

In weiterer vorteilhafter Ausgestaltung des erfindungsgemäßen ODER-Ventils ist es vorgesehen, dass die zweite Ableitung eine Anlagefläche aufweist, an welchem das zweite Rückschlagventil zum Verschließen der zweiten Ableitung bei dem dritten Druck wenigstens bereichsweise zur Anlage kommt. Die Anlagefläche ermöglicht ein besonders sicheres Abdichten ab dem dritten Druck. Insbesondere kann die Anlagefläche an eine Geometrie der Tülle angepasst sein, welche diese bei dem dritten Druck aufweist, und so die Tülle besonders gut stützen.

In weiterer vorteilhafter Ausgestaltung des erfindungsgemäßen ODER-Ventils ist es vorgesehen, dass die Anlagefläche konkav ausgebildet ist. Damit kann eine besonders hohe Dichtwirkung bei dem dritten Druck erzielt werden. Zudem ist die Anlagefläche so kostengünstig zu fertigen. Die Anlagefläche korrespondiert so gut zu der Tülle, insbesondere zu deren Stirnseite bei deren Verformung aufgrund des dritten Drucks.

In weiterer vorteilhafter Ausgestaltung des erfindungsgemäßen ODER-Ventils ist es vorgesehen, dass die jeweiligen Rückschlagventile ab einem vorbestimmten weiteren Druck, welcher geringer ist als der erste Druck, ein Strömen des Fluids von der Zuleitung in die erste Ableitung und die zweite Ableitung blockieren. Damit kann einfach ein Mindestdruck vorgegeben werden, ab welchem überhaupt ein Verbraucher mit Fluid versorgt wird. Insbesondere ist der weitere Druck dann immer noch größer, als ein Standdruck des Fluids in der Zuleitung. Zudem kann das Rückschlagventil so auch einfach ein ungewolltes Rückströmen von Fluid in die Zuleitung verhindern.

In weiterer vorteilhafter Ausgestaltung des erfindungsgemäßen ODER-Ventils ist es vorgesehen, dass das Ventil einen Bypass mit einem dritten Rückschlagventil umfasst, welcher bei dem dritten Druck ein Strömen von Fluid aus der Zuleitung zu der zweiten Ableitung an dem zweiten Rückschlagventil vorbei erlaubt, wobei der Bypass mittels des dritten Rückschlagventils bei dem zweiten Druck verschlossen ist. Mittels des Bypasses kann das ODER-Ventil einfach in ein UND-Ventil umgerüstet werden. Insbesondere kann der Ventilkörper bereits einen Anschluss für den Bypass oder den Bypass selbst umfassen. Dann muss der Bypass lediglich freigegeben oder blockiert werden bzw. angeschlossen oder versperrt werden, um zwischen den beiden Ventilarten zu wechseln. Das Ventil ist so besonders flexibel nutzbar, insbesondere als kostengünstiges und bauraumsparendes Standardteil in verschiedenen Schaltungen.

In weiterer vorteilhafter Ausgestaltung des erfindungsgemäßen ODER-Ventils ist es vorgesehen, dass die elastische Tülle des zweiten Rückschlagventils durch einen Silikonwerkstoff gebildet ist. Die Tülle aus Silikonwerkstoff ist besonders kostengünstig, dabei flexibel und robust.

In weiterer vorteilhafter Ausgestaltung des erfindungsgemäßen ODER-Ventils ist es vorgesehen, dass das Ventil für eine Reinigungseinrichtung, insbesondere eine Scheibenwaschanlage, des Kraftfahrzeugs vorgesehen ist. Es ergeben sich die gleichen Vorteile wie bei dem UND-Ventil.

Ein weiterer Aspekt betrifft eine Reinigungseinrichtung für ein Kraftfahrzeug mit wenigstens einem ersten und einem zweiten Verbraucher, einer einstellbaren Pumpeinrichtung und mit ODER-Ventil. Erfindungsgemäß ist es dabei vorgesehen, dass die Pumpeinrichtung mit einer ersten Leistungsstufe betreibbar ist, bei welcher das erste Rückschlagventil geschlossen bleibt und nur der der zweiten Ableitung zugeordnete Verbraucher mit dem Fluid versorgbar ist, und die Pumpeinrichtung mit wenigstens einer zweiten, höheren Leistungsstufe betreibbar ist, bei welcher sich das erste Rückschlagventil öffnet und das zweite Rückschlagventil schließt, wodurch nur der der zweiten Ableitung zugeordnete zweite Verbraucher mit dem Fluid versorgbar ist. Zum Steuern des Ventils ist ebenfalls wieder nur eine Zuleitung notwendig. Eine zweite Zuleitung oder eine dedizierte Steuerleitung wird nicht benötigt.

Um ein besonders kostengünstiges Kraftfahrzeug zu schaffen, ist es vorgesehen, dass dieses mit mindestens einem der oben beschriebenen Ventile und/oder mit einer der oben beschriebenen Reinigungseinrichtungen ausgerüstet ist.

Die vorstehend im Zusammenhang mit den erfindungsgemäßen Ventilen beschriebenen Vorteile und Ausgestaltungen gelten in ebensolcher Weise für die Reinigungseinrichtungen und das Kraftfahrzeug. Auch die vorstehend im Zusammenhang mit den erfindungsgemäßen Reinigungseinrichtungen beschriebenen Vorteile und Ausgestaltungen gelten in ebensolcher Weise für die Ventile, die jeweils andere Reinigungseinrichtung und das Kraftfahrzeug.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Diese zeigen in:
- Fig. 1: in einer schematischen Perspektivansicht ein Ventil für ein Kraftfahrzeug;
- Fig. 2: in einer schematischen Schnittansicht das Ventil gemäß Fig. 1;
- Fig. 3: in einer weiteren schematischen Schnittansicht ebenfalls das Ventil gemäß Fig. 1;
- Fig. 4 - 6: in jeweiligen schematischen Schnittansichten eine alternative Ausgestaltungsform des Ventils gemäß Fig. 1; und
- Fig. 7: in einer schematischen Schnittansicht eine weitere alternative Ausgestaltungsform des Ventils gemäß Fig. 1.

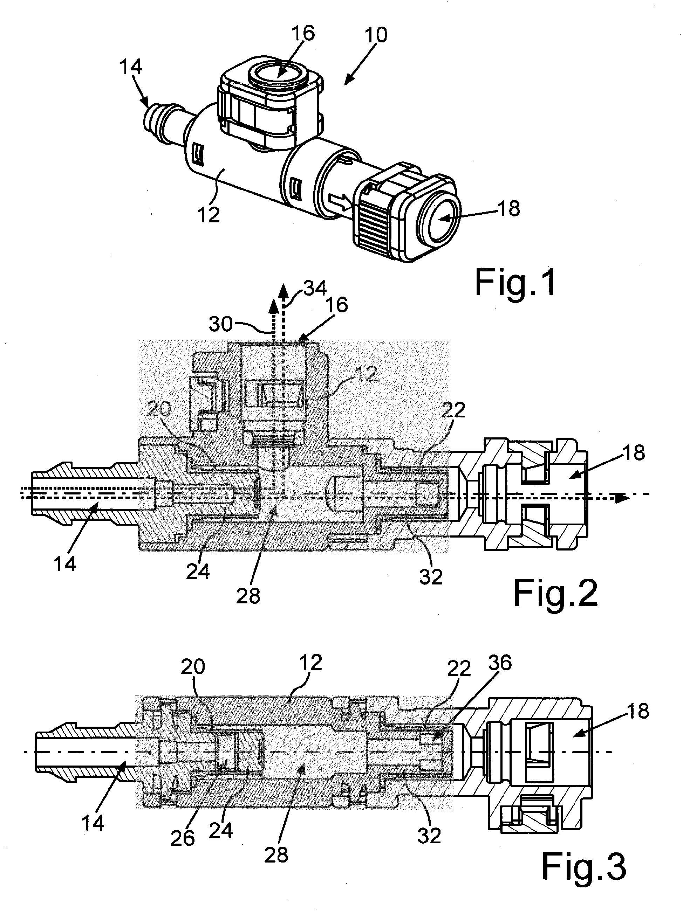

Fig. 1 zeigt in einer schematischen Perspektivansicht ein Ventil 10 für ein Kraftfahrzeug, welches einen von einem Fluid durchströmbaren Ventilkörper 12 mit einer Zuleitung 14 umfasst, welche mittels einer einstellbaren Pumpeinrichtung mit dem Fluid beaufschlagbar ist, und mit einer ersten Ableitung 16 und mit wenigstens einer weiteren, zweiten Ableitung 18 zum Versorgen eines jeweiligen zugeordneten, ersten und wenigstens eines weiteren, zweiten Verbrauchers mit dem Fluid. Das Ventil 10 gemäß Fig. 1 ist dabei so schaltbar, dass entweder der erste Verbraucher oder der erste und der zweite Verbraucher mit Fluid versorgt werden. Das Ventil 10 gemäß Fig. 1 wird deswegen auch als UND-Ventil bezeichnet.

Das Ventil 10 wird beispielsweise bei der Reinigungseinrichtung eines Kraftfahrzeugs eingesetzt. Der erste Verbraucher ist dann beispielsweise die Reinigungsanlage einer Rückfahrkamera des Kraftfahrzeugs und der zweite Verbraucher die Scheibenwaschanlage einer Heckscheibe des Kraftfahrzeugs. Dabei ist es besonders günstig, wenn die Kamera des Kraftfahrzeugs gereinigt werden kann, ohne dass gleichzeitig auch die Heckscheibe gereinigt werden muss. Die Kamera kann aufgrund ihrer Positionierung beispielsweise in der Heckstoßstange des Kraftfahrzeugs schneller verschmutzen als die Heckscheibe. Gerade bei einem Einparkmanöver kann so eine kurzfristige und besonders schnelle Reinigung dieser Kamera notwendig sein. Dabei sollte vorzugsweise die Heckscheibe nicht mitgereinigt werden, da diese Reinigung eine besonders lange Zeit beanspruchen kann und somit das Einparkmanöver verzögern könnte. Diese Reinigung der Kamera, ohne eine simultane Reinigung der Heckscheibe, ist mit dem Ventil 10 besonders kostengünstig und einfach zu realisieren.

In den beiden schematischen Schnittansichten des Ventils 10 gemäß Fig. 2 und Fig. 3 ist dargestellt, dass das Ventil 10 zwei Rückschlagventile 20 und 22 umfasst. Fig. 3 zeigt dabei das Ventil 10 in einer gegenüber Fig. 2 um 90 Grad um eine Längsachse des Ventils 10 gedrehten Darstellung.

Das Rückschlagventil 20 ist an der Zuleitung 14 des Ventils 10 angeordnet. Es ist als elastische Tülle ausgebildet, welche aus einem Silikonwerkstoff besteht und über ein zapfenförmiges Element 24 der Zuleitung 14 gestülpt ist. Unterhalb eines vorbestimmten Drucks des Fluids in der Zuleitung ist dieses Rückschlagventil 20 geschlossen und verhindert einen Rücklauf des Fluids in die Zuleitung 14. Ab einem vorbestimmten ersten Druck des Fluids in der Zuleitung 14 öffnet sich das Rückschlagventil 20. Dadurch wird eine Öffnung 26 - besonders gut zu erkennen in Fig. 3 - in dem zapfenförmigen Element 24 der Zuleitung 14 freigegeben. Die Öffnung 26 wird dabei dadurch freigegeben, dass sich die Tülle des Rückschlagventils 20 infolge des Drucks in der Zuleitung 14 elastisch verformt. Dadurch ist es möglich, dass das Fluid aus der Zuleitung 14 über den Hohlraum 28 in dem Ventilkörper 12 in die Ableitung 16 zu dem ersten Verbraucher strömt. Diese Strömung des Fluids wird in Fig. 2 durch den Pfeil 30 veranschaulicht.

Das zweite Rückschlagventil 22, welches ebenfalls als elastische Tülle aus einem Silikonwerkstoff ausgebildet ist, ist über einem zapfenförmigen Element 32 an der zweiten Ableitung 18 angeordnet. Auch von dem Rückschlagventil 22 wird dann durch eine elastische Verformung eine Öffnung 36 - besonders gut zu erkennen in Fig. 3 - freigegeben. Das Rückschlagventil 22 besteht dabei beispielsweise aus einem härteren Silikonwerkstoff als das Rückschlagventil 20 und/oder ist beispielsweise dicker. Deswegen öffnet sich das Rückschlagventil 22 bei dem ersten Druck, bei welchem sich bereits das Rückschlagventil 20 öffnet, nicht. Entsprechend wird ein Strömen des Fluids aus dem Hohlraum 28 in die Ableitung 18 zu dem zweiten Verbraucher bei dem ersten Druck noch verhindert. So ist es zunächst möglich, dass bei einem ersten Druck lediglich der erste Verbraucher mit dem Fluid versorgt wird. Bei einem zweiten Druck, welcher höher als der erste Druck ist, öffnet sich nun auch das Rückschlagventil 22. Ab diesem vorbestimmten zweiten Druck strömt also sowohl Fluid von der Zuleitung 14 über den Hohlraum 28 zu der ersten Ableitung 16 und damit dem ersten Verbraucher als auch zu der zweiten Ableitung 18 und damit dem zweiten Verbraucher. Diese Strömung wird in Fig. 2 durch den doppelten Pfeil 34 veranschaulicht.

Das Ventil 10 schaltet also in Abhängigkeit einer einstellbaren Pumpleistung der Pumpeinrichtung zwischen einer Versorgung lediglich des ersten Verbrauchers und einer Versorgung des ersten und des zweiten Verbrauchers mit dem Fluid automatisch um. Dabei sind keine zusätzlichen Steuereinrichtungen, Steuerleitung und/oder Stelleinrichtungen notwendig. Das Ventil 10 ist somit besonders kostengünstig und bauraumgünstig.

Zusätzlich können die Rückschlagventile 20 und 22 so ausgebildet werden, dass sie auch als Drossel fungieren. Damit kann eine Aufteilung des Fluidstroms, welcher durch die Zuleitung 14 strömt, in die beiden Teilmengen, welche jeweils durch die Ableitungen 16 und 18 zu den zugeordneten Verbrauchern strömen, vorbestimmt werden. Damit ist es möglich, dass einer der Verbraucher mit einer größeren Fluidmenge versorgt wird als der andere Verbraucher. Dadurch können ansonsten Versorgungsleitungen mit einem einheitlichen Querschnitt genutzt werden und/oder standardisierte Verbindungselemente eingesetzt werden.

Ebenso ist es vorstellbar, dass das Ventil 10 mehr als zwei Ableitungen 16 und 18 umfasst. Jeder weiteren Ableitung kann dabei beispielsweise ein weiteres Rückschlagventil zugeordnet werden, welches diese Ableitung erst ab einem vorbestimmten Druck des Fluids freigibt. Somit können dann auch die jeweiligen, weiteren Verbraucher in Abhängigkeit von der Pumpleistung mit Fluid versorgt werden oder nicht.

Gegenüber einem herkömmlichen Ventil ist das Ventil 10 höchstens geringfügig größer. Es muss lediglich genug zusätzlicher Bauraum für die Rückschlagventile 20 und 22 vorgesehen werden. Dadurch, dass die Rückschlagventile 20, 22 als elastische Tüllen ausgebildet sind, welche jeweils nur über das zugehörige zapfenförmige Element 24 und 32 gestülpt sind, muss beispielsweise nur eine zusätzliche Länge vorgesehen werden, um diese zapfenförmigen Elemente 24, 32 ausbilden zu können und dort die Rückschlagventile 20, 22 aufnehmen zu können. Das zapfenförmige Element 24 ist dabei beispielsweise in dem Hohlraum 28 des Ventilkörpers 12 angeordnet und benötigt somit keinen oder fast keinen zusätzlichen Bauraum. Das zapfenförmige Element 32 dient gleichzeitig als Anschlussflansch für die Leitung des zweiten Verbrauchers an der Ableitung 18 und benötigt entsprechend ebenfalls keinen oder nur einen geringfügigen zusätzlichen Bauraum. Insgesamt ist das Ventil 10 also besonders kompakt.

Das Rückschlagventil 20 ist besonders einfach für eine Wartung zugänglich, indem das zapfenförmige Element 24 aus dem Ventilkörper 12 demontiert wird. Auch das Rückschlagventil 22 ist für eine Wartung und Montage besonders einfach zugänglich, indem die Leitung des zweiten Verbrauchers von dem zapfenförmigen Element 32 abgezogen wird.

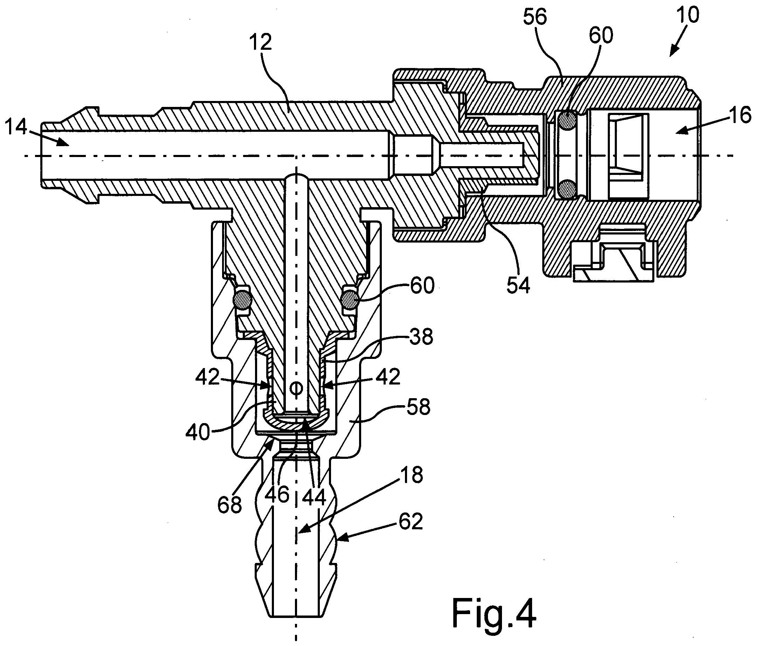

Die Fig. 4 bis 6 zeigen in jeweils einer schematischen Schnittansicht eine alternative Ausgestaltungsform des Ventils 10 gemäß Fig. 1. Bei dieser alternativen Ausgestaltungsform ist das Rückschlagventil 22 durch eine Tülle 38 gebildet, welche anders als die Tülle 38 gemäß Fig. 1 geformt ist. Diese Tülle 38 ist über ein Rohrelement 40 des Ventils 10 gestülpt, wobei die elastische Tülle 38 wenigstens eine bei dem zweiten vorbestimmten Druck durch Verformung freigebbare Durchgangsöffnung 42 aufweist. Die jeweiligen Durchgangsöffnungen 42 sind nicht in Überdeckung mit einem Ausgang 44 des Rohrelements 40 angeordnet.

Bei einem Druck, welcher kleiner ist als der vorbestimmte zweite Druck, legt sich die Tülle 38 so über das Rohrelement 40, dass dessen Ausgang 44 verschlossen ist. In diesem Fall wird also die zweite Ableitung 18 nicht mit einem Fluid versorgt. Ebenso kann aus der zweiten Ableitung 18 kein Fluid zurück in das Ventil 10 strömen. Die Durchgangsöffnungen 42 der Tülle 38 liegen in diesem Fall flach an einer Außenwand des Rohrelements 40 an, wodurch diese ebenfalls abgedichtet sind. Der Ausgang 44 ist durch eine Vorderseite 46 der Tülle 38 verschlossen. Zu diesem Zweck steht die elastische Tülle 38 unter einer gewissen Spannung, wenn sie über das Rohrelement 40 gestülpt ist.

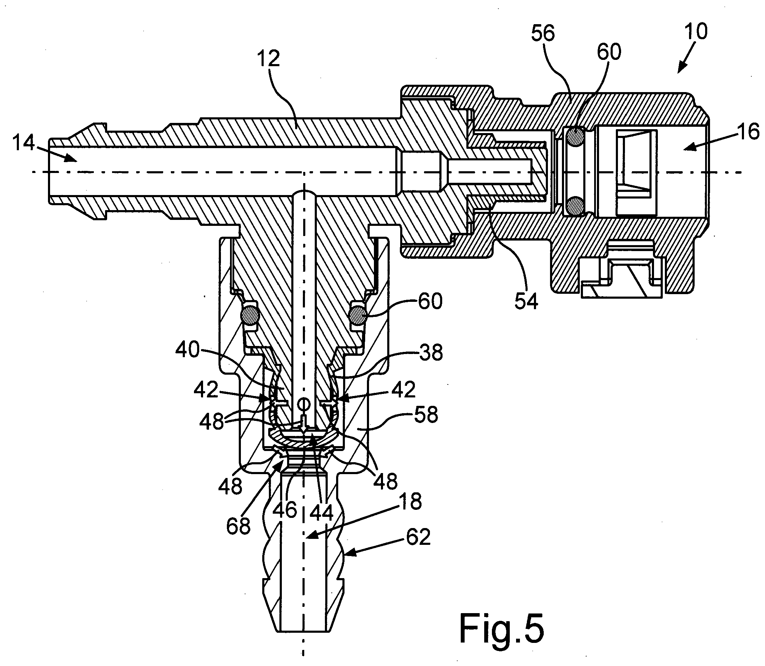

Fig. 5 zeigt in einer schematischen Schnittansicht, wie sich die Tülle 38 bei dem zweiten vorbestimmten Druck verformt. Das Fluid in dem Rohrelement 40 drückt an dem Ausgang 44 auf die Vorderseite 46 der elastischen Tülle 38. Dadurch verformt sich die Tülle 38 soweit, dass die Vorderseite 46 von dem Rohrelement 40 abhebt. Dadurch wird ein Kanal von dem Ausgang 44 zu den seitlichen Durchgangsöffnungen 42 der Tülle 38 gebildet. Entsprechend sind also die Durchgangsöffnungen 42 aufgrund einer Verformung der Tülle 38 freigegeben. Nun kann das Fluid durch das Rohrelement 40 zu der zweiten Ableitung 18 strömen. Diese Strömung ist in der Fig. 5 durch die Pfeile 48 veranschaulicht.

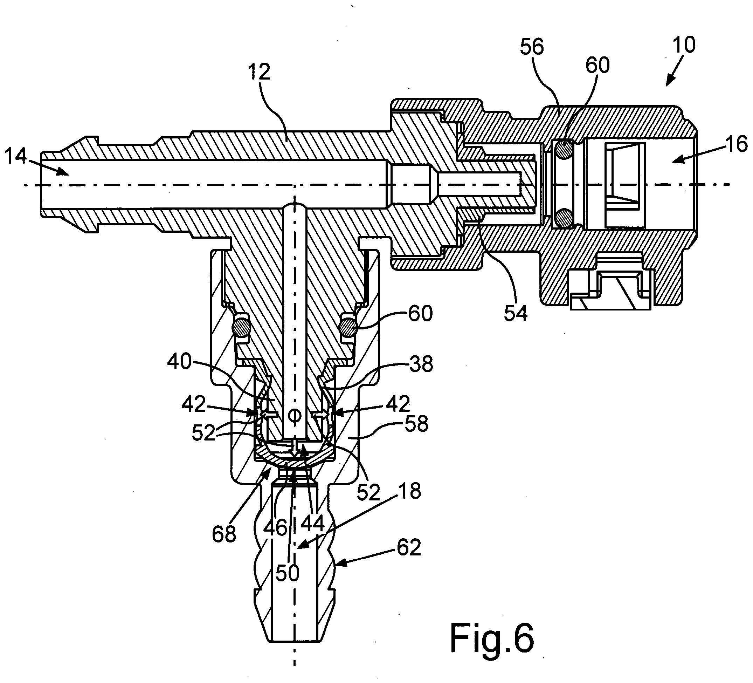

Fig. 6 veranschaulicht in einer schematischen Schnittansicht die weitere Verformung der Tülle 38 bei einem vorbestimmten dritten Druck, welcher höher ist als der zweite Druck. In diesem Fall verformt sich die Tülle 38 soweit, dass sich deren Vorderseite 46 an eine Öffnung 50 der Ableitung 18 anlegt. Der Ventilkörper 12 weist hierfür eine konkave Anlagefläche 68 auf, welche ein besonders dichtes Anlegen der durch die Verformung konvex geformten Vorderseite 46 der Tülle 38 ermöglicht. Dadurch wird die zweite Ableitung 18 blockiert und der Fluidstrom unterbrochen. Zusätzlich legen sich auch die Durchgangsöffnungen 42 an eine Innenwand des Ventils 10 an, wodurch auch diese Durchgangsöffnungen 42 verschlossen werden. So wird der Durchfluss durch die Tülle 38 besonders sicher unterbunden. Der auf die Tülle 38 wirkende Druck ist dabei in der Fig. 6 durch die Pfeile 52 veranschaulicht.

Durch die alternative Ausgestaltungsform des Ventils 10 mit der Tülle 38 kann also ein Überdruckschutz des Verbrauchers an der zweiten Ableitung 18 bereitgestellt werden. Dieser Überdruckschutz wird durch eine selbststätige und druckabhängige Schaltung des Ventils 10 bereitgestellt.

Das Ventil 10 gemäß Fig. 4 bis Fig. 6 stellt darüber hinaus noch eine andere Schaltung der Fluidversorgung der Verbraucher bereit als das Ventil 10 gemäß Fig. 1 bis Fig. 3. Bei dem Ventil 10 gemäß Fig. 4 bis Fig. 6 ist nämlich noch ein weiteres Rückschlagventil 54 an der ersten Ableitung 16 vorgesehen. Dieses Rückschlagventil 54 erlaubt einen Fluidstrom durch die erste Ableitung 16 erst ab dem dritten Druck in der Zuleitung 14. Es wird also entweder der erste oder der zweite Verbraucher mit Fluid versorgt, jedoch nicht beide Verbraucher gleichzeitig. Entsprechend wird das Ventil 10 gemäß Fig. 4 bis Fig. 6 auch als ODER-Ventil bezeichnet. Vorteilhaft an solch einer Schaltung ist die funktionale Trennung der beiden Verbraucher, insbesondere wird nicht ein Verbraucher mit Fluid mit unterschiedlichen Drücken versorgt. Dies könnte bei einer Reinigungseinrichtung zu einem ungewollten Verhalten, wie beispielsweise einem zu kräftigem Reinigungsstrahl führen.

Das Rückschlagventil 54 kann beispielsweise auch analog zu der Tülle 38 ausgebildet sein. In diesem Fall können die beiden Tüllen so gestaltet sein, dass nur die erste Ableitung 16 bei dem ersten Druck mit Fluid durchströmt wird, bei dem zweiten Druck nur die zweite Ableitung 18 und bei dem dritten Druck das Ventil 10 komplett sperrt um Verbraucher vor einem Überdruck zu schützen.

Die Tülle 38 kann also alternativ oder zusätzlich an einem Rohrelement an der ersten Ableitung 16 und/oder an einem Rohrelement der Zuleitung 14 vorgesehen werden. Dabei können die jeweiligen Tüllen 38 so ausgebildet sein, dass diese bei unterschiedlichen Drücken selbsttätig schalten. Dafür können jeweilige Tüllen 38 beispielsweise unterschiedliche Wandstärken aufweisen. Dadurch können weitere oder alternative druckabhängige Schaltungen durch das Ventil 10 bereitgestellt werden. Bei einer weiteren an der Zuleitung 14 angeordneten Tülle 38 kann beispielsweise jeder Verbraucher vor einem Überdruck geschützt werden und gleichzeitig auch ein ungewolltes Rückfließen von Fluid zu der Pumpe verhindert werden. So kann auch ein Entleeren der Zuleitung 14 verhindert werden, was sonst gegebenenfalls zu einer Beschädigung der Pumpeinrichtung führen kann und/oder zu einem verzögerten Ansprechen einer entsprechenden Scheibenwascheinrichtung bei deren Betätigung.

Durch das Vorsehen der Tülle 38 an der ersten Ableitung 16 kann die Schaltung des Ventils 10 auch umgedreht werden. Durch das zusätzliche Vorsehen einer Tülle 38 an der ersten Ableitung 16 kann durch das Ventil 10 eine Schaltung bereitgestellt werden, bei welchem bei dem ersten Druck die erste Ableitung 16 mit Fluid versorgt wird, und bei einem zweiten, höheren Druck lediglich die zweite Ableitung 18. In diesem Falle ist die Tülle 38 an der ersten Ableitung 16 so auszulegen, dass diese die Ableitung 16 bei dem zweiten vorbestimmten Druck blockiert.

Es können also jeweilige Tüllen 38 an der Zuleitung 14 der ersten Ableitung 16 und/oder der zweiten Ableitung 18 vorgesehen sein. Die Tülle 38 kann dabei an der jeweiligen Leitung an unterschiedliche Drücke angepasst sein. Dadurch kann für jede Leitung bei dem Ventil 10 vorgegeben werden, ab welchem Druck ein Durchströmen mit Fluid zugelassen wird und unterhalb und/oder oberhalb welchen Drücken ein Durchströmen mit Fluid blockiert wird.

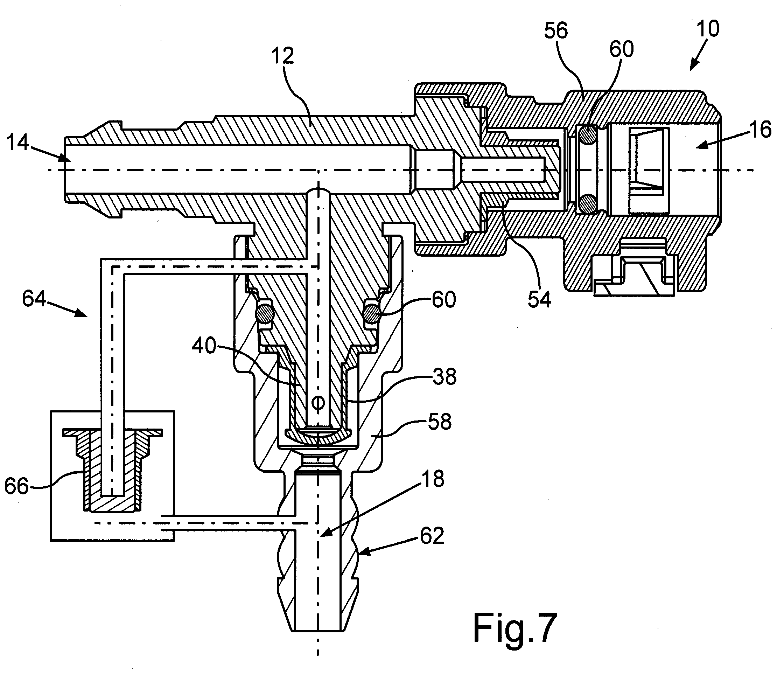

Fig. 7 zeigt in einer schematischen Schnittansicht eine weitere alternative Ausgestaltungsform des Ventils 10. An der zweiten Ableitung 18 ist eine elastische Tülle 38 angeordnet, welche genauso wie die elastische Tülle 38 gemäß der in den Fig. 4 bis 6 gezeigten Ausgestaltungsform funktioniert. Dadurch wird auch ein ungewollter Rückfluss von Fluid von der zweiten Ableitung 18 zu der Zuleitung 14 verhindert. An der ersten Ableitung 16 ist ebenfalls ein Rückschlagventil 54 angeordnet. Dieses Rückschlagventil 54 ist im in Fig. 7 gezeigten Beispiel analog zu dem Rückschlagventil 20 ausgebildet und verhindert ebenso ein ungewolltes Rückfließen von Fluid in die Zuleitung 14. Entsprechend konnte bei dieser Ausgestaltungsform des Ventils 10 auf ein Rückschlagventil an der Zuleitung 14 verzichtet werden.

Weiterhin umfasst das Ventil 10 gemäß Fig. 7 einen Bypass 64 an der zweiten Ableitung 18. Dieser Bypass 64 erlaubt ein Strömen von der Zuleitung 14 zu der zweiten Ableitung 18 selbst wenn die Tülle 38 einen Fluidstrom blockiert. In dem Bypass 64 ist ein weiteres Rückschlagventil 66 in Form einer elastischen Tülle angeordnet. Das Rückschlagventil 66 ist dabei so ausgelegt, das mit dem Ventil 10 gemäß Fig. 7 ein UND-Ventil bereitgestellt wird. Beispielsweise erlaubt der Bypass 64 ein simultanes Strömen von Fluid aus der Zuleitung 14 in die erste Ableitung 16 und die zweite Ableitung 18 bei dem dritten Druck. Das Ventil 10 gemäß Fig. 7 veranschaulicht also, wie das Ventil 10 gemäß Fig. 4 bis Fig.6 leicht von einem ODER-Ventil in ein UND-Ventil umgerüstet werden kann. Das Ventil 10 gemäß Fig. 7 kann so die gleichen Schaltzustände wie das Ventil 10 gemäß Fig. 1 bis Fig. 3 bereitstellen.

Zum Anschluss des Bypasses 64 kann an dem Ventilkörper 12 ein Schnellanschlusselement vorgesehen sein. Dann kann das Ventil 10 schnell von einem ODER-Ventil zu einem UND-Ventil umgerüstet werden. Bei Nichtnutzung des Bypasses 64 kann der Anschluss einfach verschlossen werden, beispielsweise durch einen Stopfen. Alternativ kann der Bypass 64 in dem Ventilkörper 12 integriert sein, um eine besonders platzsparende Schaltung beziehungsweise ein besonders platzsparendes Ventil 10 bereit zu stellen.

An dem Ventilkörper 12 gemäß der Ausgestaltungsform von Fig. 7 ist zu erkennen, dass für das Verbinden jeweiliger Verbraucher beziehungsweise Schläuche zur Führung des Fluids an den Ableitungen 16, 18 jeweils ein Schnellanschlusselement 56, 58 vorgesehen ist. Das Schnellanschlusselement 56 erlaubt zur Montage beispielsweise ein einfaches Einclipsen eines Schlauchs mit einem zu dem Schnellanschlusselement 56 korrespondierenden Endstück. Das Schnellanschlusselement 58 hat einen geriffelt geformten Endbereich 62, auf welchen ein Schlauch einfach aufgeschoben werden kann. Der Schlauch wird dann dort kraftschlüssig gehalten. Aufgrund der Schnellanschlusselemente 56, 58 kann das Ventil 10 beziehungsweise eine Scheibenwaschanlage mit einem solchen Ventil 10 besonders schnell und einfach montiert werden. Die jeweilige Verbindung der Schnellanschlusselemente 56, 58 mit dem Ventilkörper 12 ist dabei jeweils mit einem O-Ring 60 abgedichtet.

## Patentansprüche

1. Ventil (10) für ein Kraftfahrzeug, welches einen von einem Fluid durchströmbaren Ventilkörper (12) mit einer Zuleitung (14) umfasst, welche mittels einer einstellbaren Pumpeinrichtung mit dem Fluid beaufschlagbar ist, und mit einer ersten Ableitung (16) und mit wenigstens einer weiteren, zweiten Ableitung (18) zum Versorgen eines jeweiligen zugeordneten ersten und wenigstens eines weiteren, zweiten Verbrauchers mit dem Fluid, **dadurch gekennzeichnet, dass**
das Ventil (10) ein an der ersten Ableitung (16) angeordnetes erstes Rückschlagventil (54) umfasst und ein zweites an der zweiten Ableitung (18) angeordnetes zweites Rückschlagventil (38), wobei bei einem ersten Druck, welcher kleiner ist als ein vorbestimmter zweiter Druck, sich eine Tülle (38) so über ein Rohrelement (40) legt, dass dessen Ausgang (44) verschlossen ist, wobei das erste Rückschlagventil (54) bei dem zweiten Druck ein Strömen des Fluids von der Zuleitung (14) in die erste Ableitung (16) verhindert, während das zweite Rückschlagventil (38) bei dem zweiten Druck ein Strömen des Fluids von der Zuleitung (14) in die zweite Ableitung (18) zulässt und ab einem vorbestimmten dritten Druck, welcher höher ist als der zweite Druck, das erste Rückschlagventil (54) ein Strömen des Fluids von der Zuleitung (14) in die erste Ableitung (16) zulässt, während das zweite Rückschlagventil (38) bei dem dritten Druck ein Strömen des Fluids von der Zuleitung (14) in die zweite Ableitung (18) verhindert, wobei das zweite Rückschlagventil (38) als elastische Tülle (38) ausgebildet ist, welche über das Rohrelement (40) des Ventils (10) gestülpt ist, wobei die elastische Tülle (38) wenigstens eine bei dem zweiten vorbestimmten Druck durch Verformung freigebbare Durchgangsöffnung (42) aufweist, welche nicht in Überdeckung mit dem Ausgang (44) des Rohrelements (40) angeordnet ist.

2. Ventil (10) nach Anspruch 1,
**dadurch gekennzeichnet, dass**
ein Stirnbereich der elastischen Tülle (38), welcher wenigstens teilweise in Überdeckung mit dem Ausgang (44) des Rohrelements (40) angeordnet ist, eine größere Wandstärke aufweist als in wenigstens einem an die Durchgangsöffnung (42) angrenzenden Teilbereich.

3. Ventil (10) nach einem der Ansprüche 1 oder 2,
**dadurch gekennzeichnet, dass**
die wenigstens eine Durchgangsöffnung (42) einen Durchmesser von größer oder gleich 1 mm, insbesondere 2 mm, aufweist.

4. Ventil (10) nach einem der vorhergehenden Ansprüche,
**dadurch gekennzeichnet, dass**
die Durchgangsöffnung (42) bei dem ersten Druck durch wenigstens bereichsweise Anlage der Tülle (38) an dem Rohrelement (40) verschlossen ist und bei dem zweiten Druck durch ein wenigstens bereichsweises Abheben der Tülle (38) von dem Rohrelement (40) freigegeben ist.

5. Ventil (10) nach einem der vorhergehenden Ansprüche,
**dadurch gekennzeichnet, dass**
die zweite Ableitung (18) eine Anlagefläche (68) aufweist, an welchem das zweite Rückschlagventil (38) zum Verschließen der zweiten Ableitung (18) bei dem dritten Druck wenigstens bereichsweise zur Anlage kommt.

6. Ventil (10) nach Anspruch 5,
**dadurch gekennzeichnet, dass**
die Anlagefläche (68) konkav ausgebildet ist.

7. Ventil (10) nach einem der vorhergehenden Ansprüche,
**dadurch gekennzeichnet, dass**
die jeweiligen Rückschlagventile (38, 54) ab einem vorbestimmten weiteren Druck, welcher geringer ist als der erste Druck, ein Strömen des Fluids von der Zuleitung (14) in die erste Ableitung (16) und die zweite Ableitung (18) blockieren.

8. Ventil (10) nach einem der vorhergehenden Ansprüche,
**dadurch gekennzeichnet, dass**
das Ventil einen Bypass (64) mit einem dritten Rückschlagventil (66) umfasst, welcher bei dem dritten Druck ein Strömen von Fluid aus der Zuleitung (14) zu der zweiten Ableitung (18) an dem zweiten Rückschlagventil (38) vorbei erlaubt, wobei der Bypass (66) mittels des dritten Rückschlagventils (66) bei dem zweiten Druck verschlossen ist.

9. Ventil (10) nach einem der vorhergehenden Ansprüche,
**dadurch gekennzeichnet, dass**
die elastische Tülle (38) des zweiten Rückschlagventils (38) durch einen Silikonwerkstoff gebildet ist.

10. Ventil (10) nach einem der vorhergehenden Ansprüche,
**dadurch gekennzeichnet, dass**
das Ventil (10) für eine Reinigungseinrichtung, insbesondere eine Scheibenwaschanlage, des Kraftfahrzeugs vorgesehen ist.

11. Reinigungseinrichtung für ein Kraftfahrzeug mit wenigstens einem ersten und einem zweiten Verbraucher, einer einstellbaren Pumpeinrichtung und mit einem Ventil (10) nach einem der vorhergehenden Ansprüche, **dadurch gekennzeichnet, dass**
die Pumpeinrichtung mit einer ersten Leistungsstufe betreibbar ist, bei welcher das erste Rückschlagventil (54) geschlossen bleibt und nur der der zweiten Ableitung (18) zugeordnete Verbraucher mit dem Fluid versorgbar ist, und die Pumpeinrichtung mit wenigstens einer zweiten, höheren Leistungsstufe betreibbar ist, bei welcher sich das erste Rückschlagventil (54) öffnet und das zweite Rückschlagventil (38) schließt, wodurch nur der der zweiten Ableitung (18) zugeordnete zweite Verbraucher mit dem Fluid versorgbar ist.

12. Ventil (10) für ein Kraftfahrzeug, welches einen von einem Fluid durchströmbaren Ventilkörper (12) mit einer Zuleitung (14) umfasst, welche mittels einer einstellbaren Pumpeinrichtung mit dem Fluid beaufschlagbar ist, und mit einer ersten Ableitung (16) und mit wenigstens einer weiteren, zweiten Ableitung (18) zum Versorgen eines jeweiligen zugeordneten ersten und wenigstens eines weiteren, zweiten Verbrauchers mit dem Fluid, **dadurch gekennzeichnet, dass**
das Ventil (10) wenigstens ein Rückschlagventil (20, 22) umfasst, welches bei einem ersten Druck lediglich ein Strömen des Fluids von der Zuleitung (14) in die erste Ableitung (16) zulässt und erst ab einem vorbestimmten zweiten Druck, welcher höher ist als der erste Druck, ein Strömen des Fluids von der Zuleitung (14) auch in die zweite Ableitung (18) zulässt, wobei wenigstens ein Rückschlagventil (20, 22) eine elastisch verformbare Tülle (38) umfasst, welche über ein Rohrelement (40) des Ventils (10) gestülpt ist, wobei die elastische Tülle (38) wenigstens eine bei dem zweiten vorbestimmten Druck durch Verformung freigebbare Durchgangsöffnung (42) aufweist, welche nicht in Überdeckung mit einem Ausgang (44) des Rohrelements (40) angeordnet ist.

13. Ventil (10) nach Anspruch 12,
**dadurch gekennzeichnet, dass**
das Rückschlagventil (22) ab einem vorbestimmten dritten Druck, welcher höher ist als der zweite Druck, ein Strömen des Fluids von der Zuleitung (14) in die zweite Ableitung (18) wieder blockiert.

14. Ventil (10) nach einem der Ansprüche 12 oder 13,
**dadurch gekennzeichnet, dass**
das Rückschlagventil (22) ab einem vorbestimmten vierten Druck, welcher geringer ist als der erste Druck, ein Strömen des Fluids von der Zuleitung (14) in die erste Ableitung (16) und/oder die zweite Ableitung (18) blockiert.

15. Ventil (10) nach einem der Ansprüche 12 bis 14,
**dadurch gekennzeichnet, dass**
wenigstens ein Rückschlagventil (22) an der zweiten und/oder der ersten Ableitung (16, 18) angeordnet ist.

16. Ventil (10) nach einem der Ansprüche 12 bis 15,
**dadurch gekennzeichnet, dass**
wenigstens ein Rückschlagventil (20) an der Zuleitung (14) angeordnet ist.

17. Ventil (10) nach einem der Ansprüche 12 bis 16,
**dadurch gekennzeichnet, dass**
die elastische Tülle (38) eine stromab von dem Rohrelement (40) liegende Ableitung (16, 18) durch Verformung ab dem dritten vorbestimmten Druck blockiert.

18. Ventil (10) nach einem der Ansprüche 12 bis 17,
**dadurch gekennzeichnet, dass**
die elastische Tülle (38) durch einen Silikonwerkstoff gebildet ist.

19. Ventil (10) nach einem der Ansprüche 12 bis 18,
**dadurch gekennzeichnet, dass**
wenigstens ein Rückschlagventil (20, 22) als Drossel ausgebildet ist.

20. Ventil (10) nach einem der Ansprüche 12 bis 19,
**dadurch gekennzeichnet, dass**
das Ventil (10) für eine Reinigungseinrichtung, insbesondere eine Scheibenwaschanlage, des Kraftfahrzeugs vorgesehen ist.

21. Reinigungseinrichtung für ein Kraftfahrzeug mit wenigstens einem ersten und einem zweiten Verbraucher, einer einstellbaren Pumpeinrichtung und mit einem Ventil (10) nach einem der Ansprüche 12 bis 20,
**dadurch gekennzeichnet, dass**
die Pumpeinrichtung mit einer ersten Leistungsstufe betreibbar ist, bei welcher das wenigstens eine Rückschlagventil (20, 22) geschlossen bleibt und nur der der ersten Ableitung (16) zugeordnete Verbraucher mit dem Fluid versorgbar ist, und die Pumpeinrichtung mit wenigstens einer zweiten, höheren Leistungsstufe betreibbar ist, bei welcher sich das wenigstens eine Rückschlagventil (20, 22) öffnet und auch der der zweiten Ableitung (18) zugeordnete zweite Verbraucher mit dem Fluid versorgbar ist.

22. Reinigungseinrichtung nach Anspruch 21,
**dadurch gekennzeichnet, dass**
der erste Verbraucher die Reinigungsanlage eines Sensors des Kraftfahrzeugs, insbesondere einer Kamera, ist und der zweite Verbraucher eine Scheibenwaschanlage, insbesondere einer Heckscheibe des Kraftfahrzeugs, ist.

23. Kraftfahrzeug mit einem Ventil (10) und/oder einer Reinigungseinrichtung nach einem der vorhergehenden Ansprüche.

## Claims

1. Valve (10) for a motor vehicle, which comprises a valve body (12) through which a fluid can flow having a supply line (14) which can be supplied with fluid by means of an adjustable pump apparatus, and having a first discharge line (16) and having at least one further, second discharge line (18) to supply one respectively assigned first and at least one further, second user with the fluid,
**characterised in that**
the valve (10) comprises a first check valve (54) disposed at the first discharge line (16) and a second second check valve (38) disposed at the second discharge line (18), wherein at a first pressure, which is smaller than a predetermined second pressure, a grommet (38) is laid over a pipe element (40) such that the outlet (44) of said pipe element is closed, wherein the first check valve (54) at the second pressure prevents a flowing of the fluid from the supply line (14) into the first discharge line (16), while the second check valve (38) at the second pressure permits a flowing of the fluid from the supply line (14) into the second discharge line (18) and from a predetermined third pressure, which is higher than the second pressure, the first check valve (54) permits a flowing of the fluid from the supply line (14) into the first discharge line (16), while the second check valve (38) at the third pressure prevents a flowing of the fluid from the supply line (14) into the second discharge line (18), wherein the second check valve (38) is in the form of an resilient grommet (38) which is fitted over the pipe element (40) of the valve (10), wherein the resilient grommet (38) has at least one through opening (42) which is releasable at the second predetermined pressure by means of deformation, said through opening being disposed such that it does not overlap the outlet (44) of the pipe element (40).

2. Valve (10) according to claim 1,
**characterised in that**
a front portion of the resilient grommet (38), which is disposed at least partially overlapping the outlet (44) of the pipe element (40) has a greater wall thickness than in at least one subregion abutting on the through opening (42).

3. Valve (10) according to any of claims 1 or 2,
**characterised in that**
the at least one through opening (42) has a diameter of greater than or equal to 1 mm, in particular 2 mm.

4. Valve (10) according to any of the preceding claims,
**characterised in that**
the through opening (42) at the first pressure is closed by at least partial abutment of the grommet (38) on the pipe element (40) and at the second pressure is released by an at least partial lifting of the grommet (38) from the pipe element (40).

5. Valve (10) according to any of the preceding claims,
**characterised in that**
the second discharge line (18) has an abutment surface (68) at which the second check valve (38), for closing the second discharge line (18) at the third pressure, comes at least partly to bear.

6. Valve (10) according to claim 5,
**characterised in that**
the abutment surface (68) is formed concave.

7. Valve (10) according to any of the preceding claims,
**characterised in that**
the respective check valves (38, 54), from a predetermined further pressure which is lower than the first pressure, block a flowing of the fluid from the supply line (14) into the first discharge line (16) and the second discharge line (18).

8. Valve (10) according to any of the preceding claims,
**characterised in that**
the valve comprises a bypass (64) having a third check valve (66) which at the third pressure permits a flowing of fluid out of the supply line (14) to the second discharge line (18) past the second check valve (38), wherein the bypass (66) is at the second pressure closed by means of the third check valve (66).

9. Valve (10) according to any of the preceding claims,
**characterised in that**
the resilient grommet (38) of the second check valve (38) is formed of a silicone material.

10. Valve (10) according to any of the preceding claims,
**characterised in that**
the valve (10) is provided for a cleaning apparatus, in particular a windscreen washing apparatus, of the motor vehicle.

11. Cleaning apparatus for a motor vehicle having at least one first and one second user, an adjustable pump apparatus and having a valve (10) according to any of the preceding claims,
**characterised in that**
the pump apparatus can be operated with a first power level, at which the first check valve (54) remains closed and only the user assigned to the second discharge line (18) can be supplied with the fluid, and the pump apparatus can be operated with at least one second, higher power level, at which the first check valve (54) opens and the second check valve (38) closes, as a result of which only the second user assigned to the second discharge line (18) can be supplied with the fluid.

12. Valve (10) for a motor vehicle which comprises a valve body (12) through which a fluid can flow having a supply line (14) which can be supplied with fluid by means of an adjustable pump apparatus, and having a first discharge line (16) and having at least one further, second discharge line (18) to supply one respectively assigned first and at least one further, second user with the fluid,
**characterised in that**
the valve (10) comprises at least one check valve (20, 22), which at a first pressure permits only a flowing of the fluid from the supply line (14) into the first discharge line (16), and only from a predetermined second pressure, which is higher than the first pressure, permits a flowing of the fluid from the supply line (14) also into the second discharge line (18), wherein at least one check valve (20, 22) comprises a resilient deformable grommet (38) which is fitted over a pipe element (40) of the valve (10), wherein the resilient grommet (38) has at least one through opening (42) which is releasable at the second predetermined pressure by deformation, said through opening being disposed such that it does not overlap the outlet (44) of the pipe element (40).

13. Valve (10) according to claim 12,
**characterised in that**
the check valve (22) from a predetermined third pressure, which is higher than the second pressure, again blocks a flowing of the fluid from the supply line (14) into the second discharge line (18).

14. Valve (10) according to any of claims 12 or 13,
**characterised in that**
the check valve (22) from a predetermined fourth pressure, which is lower than the first pressure, blocks a flowing of the fluid from the supply line (14) into the first discharge line (16) and/or the second discharge line (18).

15. Valve (10) according to any of claims 12 to 14,
**characterised in that**
at least one check valve (22) is disposed at the second and/or the first discharge line (16, 18).

16. Valve (10) according to any of claims 12 to 15,
**characterised in that**
at least one check valve (20) is disposed at the supply line (14).

17. Valve (10) according to any of claims 12 to 16,
**characterised in that**
the resilient grommet (38) blocks through deformation from the third predetermined pressure a discharge line (16, 18) located downstream from the pipe element (40).

18. Valve (10) according to any of claims 12 to 17,
**characterised in that**
the resilient grommet (38) is formed from a silicone material.

19. Valve (10) according to any of claims 12 to 18,
**characterised in that**
at least one check valve (20, 22) is formed as a throttle.

20. Valve (10) according to any of claims 12 to 19,
**characterised in that**
the valve (10) is provided for a cleaning apparatus, in particular a windscreen washing apparatus, of the motor vehicle.

21. Cleaning apparatus for a motor vehicle having at least one first and one second user, an adjustable pump apparatus and having a valve (10) according to any of claims 12 to 20,
**characterised in that**
the pump apparatus can be operated with a first power level, at which the at least one check valve (20, 22) remains closed and only the user assigned to the first discharge line (16) can be supplied with the fluid, and the pump apparatus can be operated with at least one second, higher power level, at which the at least one check valve (20, 22) opens and also the second user assigned to the second discharge line (18) can be supplied with the fluid.

22. Cleaning apparatus according to claim 21,
**characterised in that**
the first user is the cleaning apparatus of a sensor of the motor vehicle, in particular a camera, and the second user is a windscreen washing apparatus, in particular of a rear windscreen of the motor vehicle.

23. Motor vehicle having a valve (10) and/or a cleaning apparatus according to any of the preceding claims.

## Revendications

1. Vanne (10) pour un véhicule automobile, qui comprend un corps de vanne (12) pouvant être traversé par un fluide avec une conduite d'amenée (14), qui peut être alimentée en fluide au moyen d'un dispositif de pompage réglable, et avec une première conduite d'évacuation (16) et avec au moins une autre, deuxième conduite d'évacuation (18) pour l'alimentation en fluide d'un premier consommateur associé respectif et d'au moins un autre, deuxième consommateur,
**caractérisée en ce que**
la vanne (10) comprend une première soupape antiretour (54) agencée au niveau de la première conduite d'évacuation (16) et une deuxième deuxième soupape antiretour (38) agencée au niveau de la deuxième conduite d'évacuation (18), dans laquelle à une première pression, qui est inférieure à une deuxième pression prédéterminée, une douille (38) se place au-dessus d'un élément de tube (40) de sorte que sa sortie (44) est fermée, dans laquelle la première soupape antiretour (54) empêche à la deuxième pression un écoulement du fluide de la conduite d'amenée (14) à la première conduite d'évacuation (16), pendant que la deuxième soupape antiretour (38) autorise à la deuxième pression un écoulement du fluide de la conduite d'amenée (14) à la deuxième conduite d'évacuation (18) et à partir d'une troisième pression prédéterminée, qui est supérieure à la deuxième pression, la première soupape antiretour (54) autorise un écoulement du fluide de la conduite d'amenée (14) à la première conduite d'évacuation (16), pendant que la deuxième soupape antiretour (38) empêche à la troisième pression un écoulement du fluide de la conduite d'amenée (14) à la deuxième conduite d'évacuation (18), dans laquelle la deuxième soupape antiretour (38) est réalisée en tant que douille élastique (38), qui est enfilée sur l'élément de tube (40) de la vanne (10), dans laquelle la douille élastique (38) présente au moins une ouverture de passage (42) libérable par déformation à la deuxième pression prédéterminée, qui n'est pas agencée en recouvrement avec la sortie (44) de l'élément de tube (40).

2. Vanne (10) selon la revendication 1,
**caractérisée en ce que**
une zone frontale de la douille élastique (38), qui est agencée au moins en partie en recouvrement avec la sortie (44) de l'élément de tube (40), présente une épaisseur de paroi supérieure à celle dans au moins une zone partielle contiguë à l'ouverture de passage (42).

3. Vanne (10) selon l'une quelconque des revendications 1 ou 2,
**caractérisée en ce que**
l'au moins une ouverture de passage (42) présente un diamètre supérieur ou égal à 1 mm, en particulier 2 mm.

4. Vanne (10) selon l'une quelconque des revendications précédentes,
**caractérisée en ce que**
l'ouverture de passage (42) est fermée à la première pression par application au moins par zone de la douille (38) contre l'élément de tube (40) et est libérée à la deuxième pression par un soulèvement au moins par zone de la douille (38) de l'élément de tube (40).

5. Vanne (10) selon l'une quelconque des revendications précédentes,
**caractérisée en ce que**
la deuxième conduite d'évacuation (18) présente une surface d'application (68), contre laquelle la deuxième soupape antiretour (38) vient en appui au moins par zone pour la fermeture de la deuxième conduite d'évacuation (18) à la troisième pression.

6. Vanne (10) selon la revendication 5,
**caractérisée en ce que**
la surface d'application (68) est réalisée de manière concave.

7. Vanne (10) selon l'une quelconque des revendications précédentes,
**caractérisée en ce que**
les soupapes antiretour (38, 54) respectives bloquent à partir d'une autre pression prédéterminée, qui est inférieure à la première pression, un écoulement du fluide de la conduite d'amenée (14) à la première conduite d'évacuation (16) et la deuxième conduite d'évacuation (18).

8. Vanne (10) selon l'une quelconque des revendications précédentes,
**caractérisée en ce que**
la vanne comprend une dérivation (64) avec une troisième soupape antiretour (66), qui permet à la troisième pression un écoulement de fluide de la conduite d'amenée (14) à la deuxième conduite d'évacuation (18) devant la deuxième soupape antiretour (38), dans laquelle la dérivation (66) est fermée à la deuxième pression au moyen de la troisième soupape antiretour (66).

9. Vanne (10) selon l'une quelconque des revendications précédentes,
**caractérisée en ce que**
la douille élastique (38) de la deuxième soupape antiretour (38) est formée par un matériau de silicone.

10. Vanne (10) selon l'une quelconque des revendications précédentes,
**caractérisée en ce que**
la vanne (10) est prévue pour un dispositif de nettoyage, en particulier une installation de lave-glace, du véhicule automobile.

11. Dispositif de nettoyage pour un véhicule automobile avec au moins un premier et un deuxième consommateur, un dispositif de pompage réglable et avec une vanne (10) selon l'une quelconque des revendications précédentes,
**caractérisé en ce que**
le dispositif de pompage peut fonctionner avec un premier niveau de puissance, pour lequel la première soupape antiretour (54) reste fermée et seul le consommateur associé à la deuxième conduite d'évacuation (18) peut être alimenté en fluide, et le dispositif de pompage peut fonctionner avec au moins un deuxième niveau de puissance plus élevé, pour lequel la première soupape antiretour (54) s'ouvre et la deuxième soupape antiretour (38) se ferme, moyennant quoi seul le deuxième consommateur associé à la deuxième conduite d'évacuation (18) peut être alimenté en fluide.

12. Vanne (10) pour un véhicule automobile, qui comprend un corps de vanne (12) pouvant être traversé par un fluide avec une conduite d'amenée (14), qui peut être alimentée en fluide au moyen d'un dispositif de pompage réglable, et avec une première conduite d'évacuation (16) et avec au moins une autre, deuxième conduite d'évacuation (18) pour l'alimentation en fluide d'un premier consommateur associé respectif et d'au moins un autre, deuxième consommateur,
**caractérisée en ce que**
la vanne (10) comprend au moins une soupape antiretour (20, 22), qui autorise à une première pression seulement un écoulement du fluide de la conduite d'amenée (14) à la première conduite d'évacuation (16) et n'autorise qu'à partir d'une deuxième pression prédéterminée, qui est supérieure à la première pression, un écoulement du fluide de la conduite d'amenée (14) également à la deuxième conduite d'évacuation (18), dans laquelle au moins une soupape antiretour (20, 22) comprend une douille élastiquement déformable (38), qui est enfilée sur un élément de tube (40) de la vanne (10), dans laquelle la douille élastique (38) présente au moins une ouverture de passage (42) libérable par déformation à la deuxième pression prédéterminée, qui n'est pas agencée en recouvrement avec une sortie (44) de l'élément de tube (40).

13. Vanne (10) selon la revendication 12,
**caractérisée en ce que**
la soupape antiretour (22) bloque à nouveau à partir d'une troisième pression prédéterminée, qui est supérieure à la deuxième pression, un écoulement du fluide de la conduite d'amenée (14) à la deuxième conduite d'évacuation (18).

14. Vanne (10) selon l'une quelconque des revendications 12 ou 13,
**caractérisée en ce que**
la soupape antiretour (22) bloque à partir d'une quatrième pression prédéterminée, qui est inférieure à la première pression, un écoulement du fluide de la conduite d'amenée (14) à la première conduite d'évacuation (16) et/ou la deuxième conduite d'évacuation (18).

15. Vanne (10) selon l'une quelconque des revendications 12 à 14,
**caractérisée en ce que**
au moins une soupape antiretour (22) est agencée au niveau de la deuxième et/ou de la première conduite d'évacuation (16, 18).

16. Vanne (10) selon l'une quelconque des revendications 12 à 15,
**caractérisée en ce que**
au moins une soupape antiretour (20) est agencée au niveau de la conduite d'amenée (14).

17. Vanne (10) selon l'une quelconque des revendications 12 à 16,
**caractérisée en ce que**
la douille élastique (38) bloque une conduite d'évacuation (16, 18) située en aval de l'élément de tube (40) par déformation à partir de la troisième pression prédéterminée.

18. Vanne (10) selon l'une quelconque des revendications 12 à 17,
**caractérisée en ce que**
la douille élastique (38) est formée par un matériau de silicone.

19. Vanne (10) selon l'une quelconque des revendications 12 à 18,
**caractérisée en ce que**
au moins une soupape antiretour (20, 22) est réalisée en tant qu'étrangleur.

20. Vanne (10) selon l'une quelconque des revendications 12 à 19,
**caractérisée en ce que**
la vanne (10) est prévue pour un dispositif de nettoyage, en particulier une installation de lave-glace, du véhicule automobile.

21. Dispositif de nettoyage pour un véhicule automobile avec au moins un premier et un deuxième consommateur, un dispositif de pompage réglable et avec une vanne (10) selon l'une quelconque des revendications 12 à 20,
**caractérisé en ce que**
le dispositif de pompage peut fonctionner avec un premier niveau de puissance, pour lequel l'au moins une soupape antiretour (20, 22) reste fermée et seul le consommateur associé à la première conduite d'évacuation (16) peut être alimenté en fluide, et le dispositif de pompage peut fonctionner avec au moins un deuxième niveau de puissance plus élevé, pour lequel l'au moins une soupape antiretour (20, 22) s'ouvre et le deuxième consommateur associé à la deuxième conduite d'évacuation (18) peut également être alimenté en fluide.

22. Dispositif de nettoyage selon la revendication 21,
**caractérisé en ce que**
le premier consommateur est l'installation de nettoyage d'un capteur du véhicule automobile, en particulier d'une caméra, et le deuxième consommateur est une installation de lave-glace, en particulier d'une lunette arrière du véhicule automobile.

23. Véhicule automobile avec une vanne (10) et/ou un dispositif de nettoyage selon l'une quelconque des revendications précédentes.
